# EUROPÄISCHE PATENTSCHRIFT

(11) **EP 0 895 008 B1**
(45) Veröffentlichungstag und Bekanntmachung des Hinweises auf die Patenterteilung: **01.10.2003**
(21) Anmeldenummer: 98112132.0
(22) Anmeldetag: 01.07.1998
(51) Int. Cl.: F16H 61/38, F16H 61/02, F16H 59/08

(54) **Verfahren zur Ansteuerung eines Automatikgetriebes und eine Schaltvorrichtung zur Auswahl der Fahrstrategien**
Method for controlling an automatic transmission and shift device to select the driving mode
Méthode de commande de transmission automatique et dispositif de sélection des lois de variation du rapport

(30) Priorität: 28.07.1997 DE 19732369
(43) Veröffentlichungstag der Anmeldung: 03.02.1999
(73) Patentinhaber: Volkswagen Aktiengesellschaft, 38436 Wolfsburg (DE)
(72) Erfinder: Jahn, Detlev, 38102 Braunschweig (DE); Stegmann, Ulrich Dipl.-Ing., 38122 Braunschweig (DE)

(56) Entgegenhaltungen:
- EP-A- 0 681 119
- EP-A- 0 697 548
- DE-A- 4 312 718
- DE-A- 4 428 684
- DE-A- 4 440 706
- DE-C- 4 120 540

## Beschreibung

Die Erfindung betrifft ein Verfahren zur Ansteuerung eines Automatikgetriebes für individuell auswählbare Fahrstrategien und eine Schaltvorrichtung zur Auswahl der gewünschten Fahrstrategien.

Übliche Einrichtungen zur Steuerung stufenloser Kraftfahrzeuggetriebe stellen die Übersetzung des Getriebes über eine Steuerkennlinie selbsttätig wenigstens in Abhängigkeit von der Fahrpedalstellung und Motordrehzahl bzw. Fahrgeschwindigkeit ein. Die Steuerkennlinie wird hierbei nach den folgenden Kriterien ausgelegt: Entweder soll diese eine möglichst ökonomische oder eine möglichst leistungsorientierte Fahrweise zulassen.

Die in der Regel zum Antrieb des Kraftfahrzeugs eingesetzten Brennkraftmaschinen erlauben es jedoch nicht, beide Kriterien zugleich zu erfüllen. Deshalb kommt häufig nur ein Kompromiß zwischen beiden Extremen in Frage, da eine rein verbrauchsoptimierte Steuerkennlinie nicht genügend Sicherheitsreserven bei kritischen Verkehrssituationen bietet und bei einer leistungsoptimierten Steuerkennlinie der Kraftstoffverbrauch zu hoch ist.

Eine weitere Möglichkeit besteht in der manuellen Umschaltung zwischen einer verbrauchsoptimierten und einer leistungsoptimierten Steuerkennlinie. Bei dieser Lösung muß der Fahrer jedoch erst einen Umschalter betätigen, bevor er das entsprechende Schaltprogramm zur Verfügung gestellt bekommt. Dem Fahrer werden nur zwei alternative Extreme angeboten, die jedoch nur eine verbrauchsorientierte oder leistungsorientierte Fahrweise zulassen.

Aus der DE 41 20 546 ist eine Steuereinrichtung für ein Automatikgetriebe bekannt, bei der die Steuereinrichtung die Übersetzung des Getriebes mittelbar über wenigstens eine Steuerkennlinie abhängig von der Stellung eines Leistungssteuervorgangs und der Motordrehzahl bzw. Fahrgeschwindigkeit einstellt, wobei die Steuereinrichtung die Steuerkennlinie entsprechend einer dem Fahrstil des Fahrers oder dessen verkehrssituationsbedingten Handeln in Bezug auf die Steuerung des Kraftfahrzeuges bewertenden Fahraktivität aus einer Schar von mehreren Steuerkennlinien auswählt.

Aus der DE 41 20 540 ist ein Verfahren zur Ansteuerung eines mit einer elektrohydraulischen Steuerung, einer Wähleinrichtung und einer steuerbaren Anfahrkupplung versehenen Automatikgetriebes bekannt, wobei die Steuereinrichtung in einer ersten Betriebsart selbsttätig eine Übersetzung des Getriebes wählt und einstellt und in einer zweiten Betriebsart ein vom Fahrer beeinflußbares Stufengetriebe nachbildet. Um die Bedienung dieser Betriebsart zu ermöglichen, werden dem Fahrer nur einige voreingestellte Übersetzungen zur Verfügung gestellt, die in Gruppen zusammengefaßt sind. Je nach einer ermittelten Fahraktivität wird eine Gruppe ausgewählt. Bei höherer Fahraktivität werden Gruppen ausgewählt, bei denen Übersetzungen stärker gespreizt sind und die Anzahl der Übersetzungen größer ist. Bei geringer Fahraktivität werden Gruppen ausgewählt, deren Spreizung kleiner und bei denen die Anzahl der Übersetzungen kleiner ist. Nachteilig an den bekannten Verfahren ist, daß diese durch die Nachbildung eines Stufengetriebes den Kraftfahrzeugführer in der Auswahl von Betriebspunkten beschränken, da beim Wechseln in die sogenannte TIP-Gasse die Getriebeübersetzung festgelegt und konstant gehalten wird, wobei die Motordrehzahl in Abhängigkeit von der Fahrgeschwindigkeit verändert wird.

Aus der DE 43 12 718 A1 ist eine Steuereinrichtung für ein stufenlos verstellbares Getriebe bekannt, wobei ein Steuergerät in einer ersten Betriebsart selbsttätig die Übersetzung des Getriebes wählt und in einer weiteren Betriebsart ein manueller Eingriff des Fahrers auf die Steuerung möglich ist, indem das Kennfeld einer Fahrstrategie beeinflußt wird. Hierbei weist das Kennfeld der Fahrstrategie jedoch Grenzen auf, so daß der Fahrer nur begrenzt den Betriebspunkt des Fahrzeugs wählen kann.

In der Gattungsbildende EP 0 697 548 A1 ist eine Betriebsart für ein stufenlos verstellbares Getriebe beschrieben, bei der der Fahrer Fahrstrategien auswählen kann. Diese Kennlinien der Fahrstrategien weisen eine Höchstbegrenzung für die Drehzahl des Motors auf, so daß bei einer weiteren Steigerung der Geschwindigkeit ein automatischer Wechsel der Fahrstrategie erfolgt.

Weiter ist in der DE 44 28 684 A1 ein stufenlos verstellbares Getriebe beschrieben, bei dem eine Steuereinheit selbsttätig die Übersetzung des Getriebes wählt, wobei die Getriebeübersetzung so gewählt wird, daß über den gesamten Bereich der Fahrgeschwindigkeit ein vorgegebener kontinuierlicher Verlauf der Motordrehzahl erreicht wird.

Der Erfindung liegt daher das technische Problem zugrunde, ein Verfahren zur Ansteuerung eines Automatikgetriebes zu schaffen, mit dem einem Fahrer ein größeres Maß an Freiheit zur Wahl eines Betriebspunktes zur Verfügung gestellt wird.

Die Lösung des technischen Problems ergibt sich durch die Merkmale des Patentanspruchs 1. Es werden dem Fahrer verschiedene Fahrstrategien zur Verfügung gestellt, wobei bei jeder Fahrstrategie die Übersetzung mindestens eine Funktion der Fahrgeschwindigkeit und/oder der Fahrpedalstellung und/oder der zu überwindenden Steigung ist und die Motordrehzahl stetig mit der Fahrgeschwindigkeit ansteigt, ohne abgeregelt zu werden. Daher kann in jeder Fahrstrategie jede gewünschte Geschwindigkeit gefahren werden. Außerdem ist während einer bestimmten Geschwindigkeit jede Fahrstrategie wählbar, so daß der Fahrer zu jedem Geschwindigkeitswert zwischen verschiedenen Drehzahlen wählen kann. Weitere vorteilhafte Ausgestaltungen der Erfindung ergeben sich aus den Unteransprüchen.

Die Erfindung wird nachfolgend anhand eines bevorzugten Ausführungsbeispiels näher erläutert. Die Figuren zeigen:
- Fig. 1: einen Drehzahl-Geschwindigkeits-Verlauf bei Nachbildung eines gestuften Getriebes für eine zweite Betriebsart eines Automatikgetriebes (Stand der Technik),
- Fig. 2: einen Drehzahl-Geschwindigkeits-Verlauf -Verlauf für unterschiedliche Fahrstrategien einer Fahrstufe und
- Fig. 3: mögliche Kennlinienverläufe für eine Fahrstrategie.

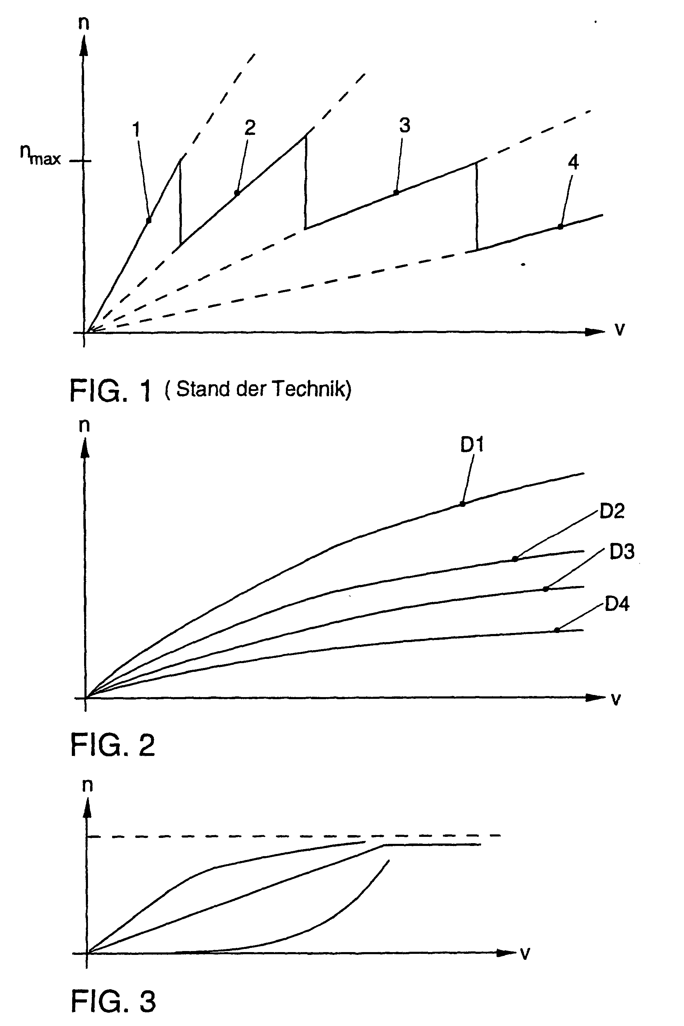

In der Fig. 1 ist der Verlauf der Drehzahl n über der Geschwindigkeit V bei Nachbildung eines gestuften Getriebes für eine zweite Betriebsart eines Automatikgetriebes dargestellt, wobei die erste Betriebsart den gewöhnlichen Betrieb eines Automatikgetriebes darstellt. Dabei werden einem Fahrer bei Auswahl der zweiten Betriebsart durch eine Wähleinrichtung mehrere Gänge 1-4 zur Verfügung gestellt, die jeweils ein konstantes Übersetzungsverhältnis aufweisen. Erfolgt während der Fahrt ein Wechsel von der ersten in die zweite Betriebsart, so wird der zu der Geschwindigkeit V zugehörige Gang 1-4 entsprechend der durchgezogenen Linie ausgewählt. Erhöht sich die Geschwindigkeit V, so erhöht sich entsprechend dem Übersetzungsverhältnis des Ganges 1-4 die Drehzahl n. Erhöht sich die Drehzahl n bis zu einer Grenzdrehzahl nₘₐₓ, ohne daß der Fahrer schaltet, so wird die Drehzahl n durch den Motor abgeregelt oder durch einen Getrieberechner automatisch die nächsthöhere Gangstufe gewählt. Ähnlich verhält sich das System bei Unterschreitung gewisser Drehzahlen n für eine Gangstufe. Dadurch ist im wesentlichen jeder Geschwindigkeit V fest eine Drehzahl n zugeordnet.

In der Fig. 2 sind verschiedene Fahrstrategien D1-D4 für eine Fahrstufe (hier "Drive"=D) dargestellt. Im Gegensatz zu den bekannten Eco/SportEco/Sport-Umschaltungen sind die Fahrstrategien D1-D4 Verkehrssituationen zugeordnet, für die jeweils eine Fahrstrategie D1-D4 optimal angepaßt ist. Die einzelnen Fahrstrategien D1-D4 sind dabei der Drehzahl nach geordnet. Die Fahrstrategie D1 ist besonders geeignet für stop and go-Verkehr im Tempo-30-Zonen, D2 für den Stadtverkehr, D3 für Fahrten auf der Landstraße und D4 für Autobahnfahrten mit Höchstgeschwindigkeit. Wie jedoch aus dem Kennlinienfeld ersichtlich ist, findet keinerlei Abregelung der Drehzahl n statt. Daher kann in jeder Fahrstrategie D1-D4 jede gewünschte Geschwindigkeit V gefahren werden, so daß auch während einer bestimmten Geschwindigkeit V jede Fahrstrategie D1-D4 auswählbar ist. Dadurch hat der Fahrer zu jeder Geschwindigkeit V eine Auswahl an Drehzahlen n, mit der dieser gerne fahren möchte. Zusätzlich kann beispielsweise eine besonders ökonomische Fahrstrategie für jede Fahrstufe auswählbar sein.

Der Wechsel von der ersten Betriebsart in die zuvor beschriebene zweite Betriebsart kann z.B. durch eine zweite, parallel angeordnete Schaltgasse erfolgen. Durch eine Bewegung des Schalthebels nach oben in die Gasse wird die nächsthöhere, durch eine Bewegung nach unten die nächstniedrigere Fahrstrategie ausgewählt. Alternativ oder kumulativ zur zweiten Schaltgasse kann ein Zweifeld- oder Dreifeld-Tastschalter vorzugsweise am Lenkrad angeordnet werden. Bei der Ausführungsform mit Zweifeld-Tastschalter wird mittels des einen Feldes der nächsthöhere und mit dem anderen die nächstniedrigere Fahrstrategie ausgewählt, wobei durch langanhaltendes Drücken und/oder Doppelklicken eines Feldes die Betriebsart gewechselt wird. Bei der Ausführungsform mit Dreifeld-Tastschalter wird dies durch Betätigung des dritten Tastfeldes realisiert. Des weiteren kann jeder Fahrstufe eine Universal-Fahrstrategie zugeordnet werden, die z.B. beim Wechsel von der ersten in die zweite Betriebsart automatisch ausgewählt wird und der Fahrstrategie in der ersten Betriebsart entspricht.

Bei einer weiteren Ausführungsform mit Dreifeld-Tastschalter und zusätzlicher Schaltgasse kann vorgesehen sein, daß ein Drücken des dritten Tastfeldes stets einen Wechsel in die Universalstrategie der Fahrstufe zur Folge hat, unabhängig von der zuvor eingestellten Betriebsart und Fahrstrategie. Ein Drücken der beiden anderen Tastfelder hingegen führt zu einem automatischen Wechsel in die zweite Betriebsart mit einer Fahrstrategie in Richtung einer höheren bzw. niedrigeren Drehzahl. Befand man sich bereits in der zweiten Betriebsart, so erfolgt mit dem Drücken des Tastfeldes nur die Auswahl einer nächsthöheren bzw. nächstniedrigeren Fahrstrategie.

Insbesondere bei der kumulativen Ausbildung mit Schaltgasse und Zweifeld-Tastschalter kann langanhaltendes Drücken und/oder Doppelklicken eines Feldes dazu benutzt werden, von der gegenwärtigen Fahrstrategie in die Universal-Fahrstrategie zu wechseln. Der Wechsel der Betriebsart erfolgt dann z.B. nur durch Wechsel des Schalthebels von der ersten in die zweite Schaltgasse. Alternativ zu der Universal-Fahrstrategie kann eine der Fahrsituation und/oder dem Fahrertyp angepaßte Fahrstrategie beim Wechsel in die zweite Betriebsart ausgewählt werden. Zusätzlich kann eine Ruhestellung vorgesehen sein, in der in Abhängigkeit von den Fahrsituationen stets die optimale Fahrstrategie automatisch ausgewählt wird. Beim Wechsel der Fahrstufe wird vorzugsweise in die Universal-Fahrstrategie der neuen Fahrstufe gewechselt.

Bei einer Ausführungsform nur mit zusätzlicher Schaltgasse führt ein Schalten in die zweite Schaltgasse zu einem Wechsel in die zweite Betriebsart, wobei entweder die Universalstrategie oder eine der Fahrsituation angepaßte Fahrstrategie ausgewählt wird. Das Hoch- bzw. Herunterschalten der Fahrstrategien erfolgt dabei durch entsprechende Bewegung des Schalthebels in der Schaltgasse.

Des weiteren kann eine Beschränkung der auswählbaren Fahrstrategien erfolgen, um gefährliche Betriebszustände zu vermeiden. Beispielsweise kann bei Einstellung einer Fahrstufe für abschüssiges Gelände vorgesehen sein, daß in der zweiten Betriebsart nur Fahrstrategien mit einer höheren Drehzahl als die Universalstrategie auswählbar sind. Zur Entlastung des Kraftfahrzeugführers kann weiter vorgesehen sein, daß ein automatischer Wechsel der Fahrstrategien erfolgt, falls die ausgewählte Fahrstrategie besonders unpassend zum Fahrgeschehen ist, weil beispielsweise der Kraftfahrzeugführer es vergessen hat, eine geeignetere Fahrstrategie auszuwählen.

In der Fig. 3 sind beispielhaft verschiedene mögliche Kennlinien für eine Fahrstrategie dargestellt, wobei jedoch stets sichergestellt sein muß, daß sich die Drehzahl n asymptotisch einem Grenzwert nähert.

## Patentansprüche

1. Verfahren zur Ansteuerung eines Automatikgetriebes mit einer elektrischen oder elektrohydraulischen Steuerung und einer Wähleinrichtung, wobei die Steuerung in einer ersten Betriebsart selbsttätig eine Übersetzung des Getriebes wählt und in einer zweiten Betriebsart vom Fahrer zumindest teilweise steuerbar ist und wobei verschiedene Fahrstrategien (D1-D4) vom Fahrer ausgewählt werden können und bei jeder Fahrstrategie (D1-D4) die Übersetzung eine Funktion mindestens der Fahrgeschwindigkeit (V) und/oder der Fahrpedalstellung und/oder der zu überwindenden Steigung ist, **dadurch gekennzeichnet, daß** in jeder Fahrstrategie (D1-D4) jede gewünschte Geschwindigkeit (V) gefahren werden kann und daß während einer bestimmten Geschwindigkeit (V) jede Fahrstrategie (D1-D4) auswählbar ist.

2. Verfahren nach Anspruch 1, **dadurch gekennzeichnet, daß** die Motordrehzahl (n) stetig mit der Fahrgeschwindigkeit (V) ansteigt, ohne abgeregelt zu werden.

3. Verfahren nach Anspruch 1 oder 2, **dadurch gekennzeichnet, daß** jeder Fahrstrategie (D1-D4) eine Verkehrssituation zugeordnet ist.

4. Verfahren nach einem der vorangegangenen Ansprüche, **dadurch gekennzeichnet, daß** beim Wechsel von der ersten in die zweite Betriebsart eine Universalstrategie für die entsprechende Fahrstufe ausgewählt wird.

5. Verfahren nach einem der Ansprüche 1 bis 3, **dadurch gekennzeichnet, daß** beim Wechsel von der ersten in die zweite Betriebsart eine dem Fahrertyp und/oder der Fahrsituation entsprechende Fahrstrategie (D1-D4) ausgewählt wird oder eine zuvor vom Fahrer schon einmal ausgewählte Fahrstrategie (D1-D4) ausgewählt wird.

6. Verfahren nach einem der vorangegangenen Ansprüche, **dadurch gekennzeichnet, daß** ein automatischer Wechsel der Fahrstrategie (D1-D4) erfolgt, falls die gewählte Fahrstrategie (D1-D4) in einem sub-optimalen Bereich sich befindet.

7. Schaltvorrichtung zur Auswahl der Fahrstrategie (D1-D4) nach einem der vorangegangenen Ansprüche, **dadurch gekennzeichnet, daß** die Schaltvorrichtung einen Zweifeld-Tastschalter umfaßt, wobei durch langanhaltendes Drücken oder schnelles Doppeldrücken eines der beiden Tastfelder die Betriebsart wechselbar ist und durch Drücken des ersten bzw. zweiten Tastenfeldes die nächsthöhere bzw. nächstniedrige Fahrstrategie (D1-D4) auswählbar ist.

8. Schaltvorrichtung nach Anspruch 7, **dadurch gekennzeichnet, daß** dem Zweifeld-Tastschalter ein drittes Tastfeld zugeordnet ist, durch dessen Betätigung die Betriebsart wechselbar und/oder die Universalstrategie einstellbar ist.

9. Schaltvorrichtung nach Anspruch 7 oder 8, **dadurch gekennzeichnet, daß** parallel zu einer ersten Schaltgasse für die Fahrstufe eine zweite Schaltgasse angeordnet ist, wobei durch die Betätigung eines Schalthebels in die zweite Schaltgasse die zweite Betriebsart auswählbar ist und umgekehrt und durch Bewegung in der zweiten Schaltgasse eine höhere oder niedrigere Fahrstrategie (D1-D4) abhängig von der Bewegungsrichtung auswählbar ist.

## Claims

1. Method for actuating an automatic gearbox having an electrical or electrohydraulic controller and a selector device, the controller automatically selecting a transmission ratio of the gearbox in a first operating mode and being capable of being at least partially controlled by the driver in a second operating mode, and it being possible for the driver to select various driving strategies (D1-D4), and the transmission ratio at each driving strategy (D1-D4) being a function of at least the travel speed (V) and/or the accelerator pedal position and/or the positive incline to be overcome, **characterized in that** in each driving strategy (D1-D4) it is possible to travel at any desired speed (V), and **in that** each driving strategy (D1-D4) can be selected during a specific speed (V).

2. Method according to Claim 1, **characterized in that** the engine speed (n) rises continuously with the travel speed (V) without being reduced.

3. Method according to Claim 1 or 2, **characterized in that** each driving strategy (D1-D4) is assigned a traffic situation.

4. Method according to one of the preceding claims, **characterized in that** at the changeover from the first into the second operating mode a universal strategy for the respective driving position is selected.

5. Method according to one of Claims 1 to 3, **characterized in that** at the changeover from the first into the second operating mode a driving strategy (D1-D4) which corresponds to the driver type and/or the driving situation is selected or a driving strategy (D1-D4) which has already previously been selected once by the driver is selected.

6. Method according to one of the preceding claims, **characterized in that** an automatic changeover of the driving strategy (D1-D4) takes place if the selected driving strategy (D1-D4) is in a sub-optimum range.

7. Switching device for selecting the driving strategy (D1-D4) according to one of the preceding claims, **characterized in that** the switching device comprises a two-field momentary contact switch, it being possible to change the operating mode by persistently pressing or quickly double-pressing one of the two momentary contact fields and to select the next highest or next lowest driving strategy (D1-D4) by pressing the first or second momentary contact field.

8. Switching device according to Claim 7, **characterized in that** the two-field momentary contact switch is assigned a third momentary contact field which, by being actuated, can change the operation mode and/or can set the universal strategy.

9. Switching device according to Claim 7 or 8, **characterized in that** a second shift slot is arranged in parallel with a first shift slot for the driving position, in which, by actuating a gearshift lever into the second shift slot, it is possible to select the second operating mode, and vice versa, and by movement in the second shift slot it is possible to select a higher or lower driving strategy (D1-D4) as a function of the direction of movement.

## Revendications

1. Procédé pour la commande d'une boîte de vitesse automatique avec une commande électrique ou électrohydraulique et un dispositif de sélection, où, dans un premier mode de fonctionnement, la commande sélectionne automatiquement un rapport de transmission de la boîte de vitesses et, dans un deuxième mode de fonctionnement, elle peut être pilotée par le conducteur au moins partiellement et où différentes stratégies de conduite (D1-D4) peuvent être sélectionnées par le conducteur et, pour chaque stratégie de conduite (D1-D4), le rapport est une fonction d'au moins la vitesse de déplacement (V) et/ou de la position de la pédale d'accélérateur et/ou de la pente à vaincre, **caractérisé en ce que**, dans chaque stratégie de conduite (D1-D4), il est possible de rouler à n'importe quelle vitesse (V) souhaitée et **en ce qu'**à chaque vitesse (V) déterminée, chacune des stratégies de conduite (D1-D4) peut être sélectionnée.

2. Procédé selon la revendication 1, **caractérisé en ce que** le régime du moteur (n) augmente de manière constante avec la vitesse de déplacement (V), sans être réglé.

3. Procédé selon la revendication 1 ou 2, **caractérisé en ce que** chaque stratégie de conduite (D1-D4) est associée à une situation de circulation.

4. Procédé selon l'une quelconque des revendications précédentes, **caractérisé en ce que**, lors du changement du premier mode de fonction vers le deuxième mode de fonctionnement, une stratégie universelle est sélectionnée pour la position de marche correspondante.

5. Procédé selon l'une des revendications 1 à 3, **caractérisé en ce que**, lors du changement du premier mode de fonctionnement vers le deuxième mode de fonctionnement, une stratégie de conduite (D1-D4) correspondant au type de conducteur et/ou à la situation de circulation est sélectionnée ou une stratégie de conduite (D1-D4) sélectionnée déjà une fois auparavant par le conducteur est sélectionnée.

6. Procédé selon l'une quelconque des précédentes revendications, **caractérisé en ce qu'**un changement automatique de la stratégie de conduite (D1-D4) a lieu si la stratégie de conduite sélectionnée (D1-D4) se trouve dans une plage sous-optimale.

7. Dispositif de commande pour la sélection de la stratégie de conduite (D1-D4) selon l'une quelconque des précédentes revendications, **caractérisé en ce que** le dispositif de commande comprend un commutateur à deux touches, où, par un enfoncement prolongé ou un double enfoncement rapide d'une des deux touches, le mode de fonctionnement peut être changé et, en enfonçant la première ou la deuxième touche, il est possible de sélectionner la stratégie de conduite (D1-D4) immédiatement supérieure ou immédiatement inférieure.

8. Dispositif de commande selon la revendication 7, **caractérisé en ce qu'**au commutateur à deux touches est associée une troisième touche dont l'actionnement permet de changer de mode de fonctionnement et/ou de régler la stratégie universelle.

9. Dispositif de commande selon la revendication 7 ou 8, **caractérisé en ce que**, parallèlement à une première grille de sélection pour la position de marche, une deuxième grille de sélection est disposée, où, par l'actionnement d'un levier de commande dans la deuxième grille, on peut sélectionner le deuxième mode de fonctionnement et inversement et où, par un mouvement dans la deuxième grille de sélection, il est possible de sélectionner une stratégie de conduite (D1-D4) supérieure ou inférieure en fonction du sens du mouvement.
